# EUROPEAN PATENT APPLICATION

(11) **EP 4 667 284 A1**
(43) Date of publication of application: **24.12.2025**
(21) Application number: 24183597.4
(22) Date of filing: 21.06.2024
(51) Int. Cl.: B60Q 1/00, B60Q 5/00, G10K 9/22, H04R 1/02

(54) **ACOUSTIC VEHICLE ALERTING SYSTEM FOR A VEHICLE**

(71) Applicant: HELLA GmbH & Co. KGaA, 59552 Lippstadt (DE)
(72) Inventor: Avram, Sebastian, Timisoara (RO); Martin, Lucian Stefan, Timisoara (RO); Pirvut, Laurentiu, Timisoara (RO); Probajie, Elisa Ana Maria, Timisoara (RO); Sirbu, Gabriel, 307125 Sat Costeiu, com. Costeiu (RO)
(74) Representative: Behr-Wenning, Gregor

(57) **Abstract**

The invention relates to an acoustic vehicle (200) alerting system (100) for a vehicle (200), in particular for an electric vehicle (200) and/or hybrid vehicle (200), comprising:
- a lamp (50) configured for providing an illumination along a longitudinal direction (z),
- a speaker (1) configured for providing an alerting signal along the longitudinal direction (z), wherein the speaker (1) comprises a cover (60),
- wherein the lamp (50) and the cover (60) are configured to be selectively arranged in a first configuration (I) or a second configuration (II), wherein
o in the first configuration (I) the lamp (50) is arranged inside of the cover (60), or
o in the second configuration (II) the cover (60) is arranged inside of the lamp (50).

Furthermore, the invention comprises a vehicle (200) with at least one acoustic vehicle alerting system (100).

## Description

The present invention relates to an acoustic vehicle alerting system with the features of the independent system claim and a vehicle with the features of the independent vehicle claim.

Acoustic vehicle alerting systems may comprise a lamp and a speaker for providing an alerting signal. For example, electric vehicles comprising such a system produce an alerting signal, in particular when driving at comparably low speed (e.g. below 30 km/h), to warn pedestrians and other road users.

However, known acoustic vehicle alerting systems have drawbacks. These systems can be designed for one application, in particular one application (e.g. a specific vehicle) only. Consequently, existing systems are not flexible. These systems can be specially (uniquely) designed. This can result in high financial costs, costs regarding time (and or manpower), and/or reduced robustness (e.g. due to reduced production numbers and/or resources for engineering). In addition, this can lead to a lack (and/or high cost) of replacement parts (later). This can also mean that these systems are not environmentally friendly. Furthermore, known system can be comparably complex with respect to manufacturing and/or mounting and/or service.

Consequently, it may be one objective problem of the present invention to (at least partly) overcome at least one of the aforementioned disadvantages. In particular, it can be an objective to provide a system with optimized costs, flexibility, robustness, environmental sustainability and/or simplicity.

The above objective problem is solved by an acoustic vehicle alerting system with the features of the independent system claim and a vehicle with the features of the independent vehicle claim. Further features and details of the invention are shown in the dependent claims, the description and the drawings. Features and details which are described with respect to the disclosed system also apply to the disclosed vehicle and vice versa, so that reference is or can always be made mutually with regard to the disclosure of the individual aspects of the invention. In particular, features corresponding to the first aspect of the invention may also be part of the second aspect of the invention and vice versa.

According to a first aspect of the invention, the above objective problem is solved by an acoustic vehicle alerting system for a vehicle (e.g. according to the second aspect), in particular for an electric vehicle and/or hybrid vehicle, comprising:
- a lamp configured for providing an illumination (essentially) along a longitudinal direction (e.g. an optical axis),
- a speaker configured for providing an alerting signal (essentially) along the longitudinal direction, wherein the speaker comprises a cover,
- wherein the lamp and the cover are configured to be selectively arranged in a first configuration and/or a second configuration, wherein
   ∘ in the first configuration the lamp is arranged inside of the cover, in particular with respect to the longitudinal direction, and/or
   ∘ in the second configuration the cover is arranged inside of the lamp, in particular with respect to the longitudinal direction.

The lamp configured for providing an illumination (essentially and/or primarily) along a longitudinal direction (optical axis), can emit light, in particular along the longitudinal direction and/or (partly) perpendicular to the longitudinal direction. The longitudinal direction may point along the driving direction of a vehicle, in particular when the system is mounted in a vehicle (e.g. lamp as front lamp). Preferably the system and/or the lamp is configured for use as front lamp and/or side lamp and/or rear lamp of a vehicle. The lamp can emit light along the longitudinal direction. In a mounted state (when all parts of the system are mounted and/or arranged) the lamp can be placed at the front end of the system (along the longitudinal direction). Preferably, no other part covers the lamp. The lamp may be arranged in the bracket (see below). The lamp may comprise a (specific) circuitry and/or printed circuit board, configured to control and/or drive the lamp. This can be advantageous when different lamps are combined with a (general and/or "one size fits all") printed circuit board.

The speaker configured for providing an alerting signal (essentially), along the longitudinal direction, comprises a cover. The speaker therefore can be a sound device or speaker device, comprising at least a sound generator and a cover. The speaker and/or sound generator may be configured to produce an alerting signal. An alerting signal can be a (constant and/or repeated) noise configured for warning other road users. Alternatively or in addition, the speaker and/or an alerting signal can also be used like a horn, in particular for warning other road users only when the driver and/or the vehicle provides a control signal. Therefore, an additional horn might be unnecessary. The bracket (see below) can form a part of the speaker, e.g. by propagating and/or reflecting sound waves emitted by the sound generator towards the cover. The cover may be configured for emitting the sound waves (of the speaker and/or sound generator) to the surrounding and/or front (along the longitudinal) direction of the system. The cover may be configured to protect the speaker and/or sound generator. Preferably, the cover is configured to be transparent for sound waves passing along the longitudinal direction and/or protective with respect to objects (e.g. insects, stones, sand, dirt, water) entering the cover (opposite to the longitudinal direction). For example, this can be realized by a plurality of triangular and/or pyramid structures in the cover, wherein a long side and/or base of the triangle and/or pyramid is oriented perpendicular to the longitudinal direction and/or pointing in the longitudinal direction. The cover can comprise a round shape, in particular perpendicular to the longitudinal direction. In a first configuration, the cover may have a ring-shaped (annular) cross-section perpendicular to the longitudinal direction. In a second configuration, the cover may have a round and/or circular cross-section perpendicular to the longitudinal direction. A configuration can comprise (or be) a (specific and/or geometrical) arrangement of the system and its' parts, in particular the bracket, lamp, and/or cover. Therefore, the system may comprise (or be) an assembly group, comprising
- changing parts (which can be different between the first and second configuration), preferably the lamp, the cover, and/or the bracket,
- non-changing parts (which can be identical with respect to the first and second configuration), preferably the housing, the printed circuit board and/or the sound generator, the (first, second, and/or third) seal and/or the electronic control unit.

This can improve the costs, environmental sustainability and/or robustness. The non-changing parts can (at least partly) be pre-mounted and/or readily prepared during production. This can improve the costs and/or efficiency. The above parts can be arranged and/or mounted, in particular by moving and/or rotating them with respect to each other along the longitudinal direction, e.g. by hand. Preferably, a mounting can be configured to be tool-free. A mounting of the different parts can preferably be configured to be reversibly detachable, e.g. by several click fasteners and/or bayonet catches. This can improve the mounting process and/or maintenance and/or environmental sustainability.

The lamp and the cover are configured to be selectively arranged in a first configuration or a second configuration, wherein
∘ in the first configuration the lamp is arranged inside of the cover, in particular with respect to the longitudinal direction, or
∘ in the second configuration the cover is arranged inside of the lamp, in particular with respect to the longitudinal direction.

Therefore, the lamp and the cover can (at least partly) be arranged at the same position along the longitudinal direction. The lamp and the cover can be positioned at the front of the system (when mounted) and/or at the foremost end. For example, in the first configuration the lamp may comprise a smaller extension perpendicular to the longitudinal direction and/or a smaller diameter than the cover. For example, in the second configuration the lamp may comprise a larger extension perpendicular to the longitudinal direction and/or a larger diameter than the cover. Preferably, the lamp and the cover comprise a complementary shape, in particular in a cross section perpendicular to the longitudinal direction. Preferably, at least two different lamps and/or two different types of covers and/or two different types of brackets can be designed. Therefore, a first lamp can correspond to a first cover (and they may comprise a complementary shape) and/or first bracket. Therefore, a second lamp can correspond to a second cover (and they may comprise a complementary shape), and/or second bracket. In a first configuration, the lamp may block the alerting signal and/or guide the alerting signal (circumferentially) around the lamp. The lamp may (at least) partly be configured for blocking and/or guiding the alerting signal and/or its sound waves. For example, in particular in the first configuration, the backside of the lamp may comprise a conical shape and/or a changing diameter to (better) guide the alerting signal around the lamp.

In the context of the present invention, a system may be provided wherein
- in the first configuration an outer (circumferential) surface of the lamp is oriented towards and/or parallel to an inner (circumferential) surface of the cover,
- in the second configuration an outer (circumferential) surface of the cover is oriented towards and/or parallel to an inner (circumferential) surface of the lamp.

This can mean, that the outer/inner surface of the lamp can be neighboring and/or in contact with the inner/outer surface of the cover. The surfaces can be parallel to the longitudinal direction. Consequently, the lamp and the cover, in particular the surfaces, may comprise a complementary (geometrical) form. For example, the cover and/or the lamp may comprise a cylindrical shape, which, at least in parts, is oriented and/or in contact with a cylindrical shape and/or inner surface of a hollow cylinder of the lamp and/or cover.

In the context of the present invention, a system may be provided wherein the speaker comprises a sound generator that is configured identical in the first configuration and the second configuration, wherein the sound generator is configured for generating the alerting signal.

The speaker can be (partly) different between the first and second configuration, in particular due to a changing cover and/or bracket. The sound generator can preferably be a non-changing part. The sound generator can be used for the first and the second configuration. Preferably, the position of the sound generator is identical in the first and second configuration. Preferably, the sound generator is (directly) mounted on and/or connected to the printed circuit board, in particular in the longitudinal direction, e.g. by a click fasteners and/or bayonet catches and/or screws. That means, that the printed circuit board and the sound generator can be pre-mounted and/or prepared, in particular independent of the first and/or second configuration. The sound generator can be positioned between the printed circuit board and the bracket. The sound generator can be provided with power by the printed circuit board, e.g. via a wiring. The printed circuit board and/or an electronic control unit can control the speaker, in particular by providing a control signal, based on which the sound generator can generate the alerting signal.

In the context of the present invention, a system may be provided wherein the speaker is configured differently in the first configuration and the second configuration.

While the sound generator can preferably be non-changing part, the bracket and/or the cover can be changing parts.

In the context of the present invention, a system may be provided comprising a housing configured to receive the lamp, (at least partly) the speaker, in particular the sound generator, and/or the cover, wherein the outer circumference of either the lamp and/or the cover and/or the bracket is in contact with an inner surface of the housing. Preferably, the housing can be identical in the first and second configuration. The housing can comprise a hollow cylinder oriented along the longitudinal direction. The housing may comprise a bottom (closed side) and/or an opening (open side). Preferably, the lamp and the cover are positioned in the opening of the housing. Therefore, the printed circuit board can be mounted first inside of the housing, e.g. oriented perpendicular to the longitudinal direction and/or attached to the bottom and/or closed side of the housing. The sound generator may (then) be mounted on the printed circuit board and/or inside of the housing. The bracket may (then) be mounted (at least partly) inside of the housing, e.g. attached to the sound generator and/or an inner (circumferential) surface of the housing and/or (at least partly) attached to the front of the housing. The housing may comprise attachment means at the opening and/or at the foremost end (along the longitudinal direction) configured for engaging with the bracket. Therefore, different forms (e.g. corresponding to the first and second configuration) of the bracket can (in any case) be attacked in and/or at the housing. For example, the attachment means (e.g. two or four) can be arranged circumferentially at the inner surface of the housing near the opening. The housing may comprise at least one guiding, in particular a guiding rail, in which a corresponding protrusion of the bracket may be guided for facilitated mounting.

In the context of the present invention, a system may be provided wherein the housing is configured identical in the first configuration and the second configuration.

Therefore, the housing can be non-changing part. For example, the housing can (in any configuration) comprise the form of a hollow cylinder with a closed end and an open end. Preferably, the housing is configured for mounting the system inside of a car, for example using vehicle attachment means.

In the context of the present invention, a system may be provided comprising a printed circuit board on which the speaker, in particular the sound generator and/or bracket, is mounted, wherein the printed circuit board is configured identical in the first configuration and the second configuration.

The printed circuit board may be mounted between the housing (e.g. the bottom of the housing) and the sound generator. Therefore, the printed circuit board may be (easily) connected to a power system of the vehicle, in particular from the bottom of the housing. Preferably, the speaker and/or sound generator and/or bracket is identically mounted on and/or at the printed circuit board in both the first and second configuration. For example, the speaker, in particular the sound generator, may be glued to the printed circuit board. This allows for a robust connection. Alternatively or in addition, the speaker, in particular the sound generator may be attached to the printed circuit board by a click fastener and/or bayonet catch. This can allow for easy mounting and/or maintenance. For example, the bracket may be glued to the printed circuit board and/or the sound generator and/or the housing. This allows for a robust connection. Alternatively or in addition, the bracket may be attached to the printed circuit board, the sound generator, and/or the housing by a (corresponding) click fastener and/or bayonet catch. This can allow for easy mounting and/or maintenance. Preferably, the printed circuit board is configured for providing (electrical) power (current and/or voltage) to (both) the lamp and/or the speaker, in particular the sound generator. The printed circuit board may also be configured for controlling the lamp and/or the speaker, in particular the sound generator, e.g. by a control signal transmitted via a wiring. For example, the printed circuit board may send a control signal to the lamp to turn on the lamp, switch of the lamp and/or change any one of the light properties of the lamp (e.g. intensity, color, blinking frequency et cetera). For example, the printed circuit board may send a control signal to the speaker, in particular the sound generator, to generate the alerting signal. Alternatively or in addition, the system and/or the speaker and/or sound generator and/or the lamp and/or the printed circuit board may comprise and/or be connected to an electronic control unit (e.g. of the car) configured for controlling the system and/or the speaker and/or the sound generator and/or the lamp and/or the printed circuit board. Therefore, an electronic connection can be arranged between the electronic control unit and the system and/or the speaker and/or sound generator and/or the lamp and/or the printed circuit board. For example, the electronic control unit may send a control signal to the printed circuit board and/or the lamp to turn on the lamp, switch of the lamp and/or change any one of the light properties of the lamp (e.g. intensity, color, blinking frequency et cetera). For example, the electronic control unit may send a control signal to the speaker, in particular the sound generator, to generate the alerting signal. It is also possible, that the electronic control unit may send the control signal to the printed circuit board, which then sends a depending control signal to the sound generator. Therefore, the printed circuit board can be configured as switch for a variety of lamps and/or speakers, in particular sound generators. The printed circuit board may comprise one or more of the following connections:
- a connection for CAN communication, e.g. for connecting an electronic control unit,
- a (shared) power supply e.g. for the lamp and/or the speaker (sound generator),
- a (shared) ground potential,
- an analog input and/or output for the lamp and/or the speaker,
- a driver interface, e.g. for connecting an electronic control unit, and/or
- a ON/ OFF switch.

In the context of the present invention, a system may be provided wherein the lamp and the cover are (at least partly) coaxially aligned, in particular symmetric with respect to each other and/or the longitudinal direction. The lamp, the cover, the bracket, the sound generator, and/or the housing may (at least partly) comprise an identical cross-section with respect to the longitudinal direction, e.g. round, circular, annular, polygonal, rectangular, quadratically and/or triangular.

In the context of the present invention, a system may be provided comprising a bracket configured for holding the cover.

The bracket may be configured for receiving and/or holding the lamp and/or the cover. For example, the bracket may comprise an inner opening (open towards and/or along the longitudinal direction) in which the lamp or the cover can be mounted. For example, the bracket may comprise an outer opening (open towards and/or along the longitudinal direction) in which the cover or the lamp can be mounted. The inner opening may comprise a circular and/or cylindrical shape, in particular perpendicular and/or symmetrical to the longitudinal direction. The outer opening may comprise a ring-shaped form (e.g. like a hollow cylinder, in particular perpendicular and/or symmetrical to the longitudinal direction. For example, the inner and/or outer opening may comprise a recess in the (cylindrical) bracket. The bracket may be symmetrical and/or coaxially arranged with respect to the longitudinal direction, the lamp, the cover, and/or the housing. The bracket may be connected and/or attached to the sound generator, e.g. by an input part of the bracket comprising a hollow cylinder. Preferably, the bracket can be (at least partly) attached in, at and/or on the housing, in particular by attachment means. Therefore a (first) part of the bracket can preferably be mounted and/or attached inside of the housing. A (second) part of the bracket can preferably be mounted and/or attached at and/or in front of the housing (in / along the longitudinal direction).

In the context of the present invention, a system may be provided wherein, in particular the first configuration, the bracket is configured to propagate, in particular amplify, the alerting signal.

The bracket may preferably be configured for receiving the alerting signal emitted by the sound generator. Preferably, the alerting signal is primarily or only emitted in and/or towards the bracket. The bracket may be connected to the sound generator, e.g. by providing a circumferential enclosure for the sound generator (in which the sound generator emits the alerting signal) and/or to provide a wave guide for the sound waves generated by the sound generator. Therefore, the bracket can be configured to guide and/or reflect the alerting signal and/or sound waves corresponding to the alerting signal, and in particular (thereby) guiding the alerting signal to the cover and/or the surroundings (in particular along the longitudinal direction). The bracket can be and/or form a part of the speaker, in particular by providing a wave guide. Therefore, the speaker can comprise a sound generator configured for generating the alerting signal, a bracket configured for guiding the alerting signal, and/or a cover configured for emitting the signal to the surroundings, in particular along the longitudinal direction (e.g. to the front, side and/or rear of the vehicle).

In a first configuration, the bracket may at least partly be funnel-shaped. The bracket may (at least partly) comprise a changing, in particular increasing diameter. The bracket may be configured to guide the alerting signal, in particular the sound waves, (circumferentially) around the lamp. This can improve and/or amplify the alerting signal. This can also increase the coverage of the alerting signal. Preferably, the bracket comprises a central and/or inner opening for receiving and/or attaching the lamp (inside). The bracket may comprise an outer (hollow) opening for receiving and/or attaching the cover (inside) and/or configured for guiding the alerting signal.

In a second configuration, the bracket may at least partly be cylindrically shaped, in particular like a hollow cylinder. The bracket may be configured to guide the alerting signal, in particular the sound waves, (circumferentially) inside and/or through the bracket and/or the lamp. This can improve and/or focus the alerting signal. In particular, this can lead to increased range of the alerting signal (sound waves can be compressed and/or focused). Preferably, the bracket comprises a central and/or inner opening for receiving and/or attaching the cover (inside) and/or configured for guiding the alerting signal. The bracket may comprise an outer (hollow) opening for receiving and/or attaching the lamp (inside).

It is possible, that the bracket comprises a flexible section, which is configured to be adapted such that the (same) bracket can be used both for the first and second configuration. For example, the bracket may comprise a funnel-shaped flexible section, which selectively can adjust its form in dependence of the first and/or second configuration, e.g. by changing a circumferentially oriented angle with respect to the longitudinal direction. Therefore, this section can be in contact with an outer opening of the bracket in a first configuration and with an inner opening in the second configuration. Like this, the alerting signal can be guided to the outer opening in the first configuration (wherein the lamp blocks the inner opening) and to the inner opening in the second configuration.

In the context of the present invention, a system may be provided wherein the bracket comprises a first contact and a second contact, wherein the first contact and the second contact are electrically connected by a conductor, wherein the conductor is configured to provide power to the lamp.

The first contact may be connected to the printed circuit board, which preferably provides (electrical) power to the first contact. The power may be transferred to the lamp, in particular via the first contact, conductor and/or second contact. It is possible that the lamp comprises a specific and/or integrated printed circuit board configured for driving the lamp. This can lead to a standardized printed circuit board (of the system) which can handle a broad variety of different lamps.

In the context of the present invention, a system may be provided comprising a (first, second and/or third) seal arranged between the lamp, the cover, the bracket and/or the housing.

A seal may be configured for protecting the system from the surrounding and/or environment, e.g. from water, dirt, heat et cetera. The seal(s) may comprise an elastic material, e.g. rubber. The seal(s) may comprise a symmetrical, cylindrical (e.g. hollow cylinder) and/or coaxial shape, in particular with respect to the longitudinal direction, the lamp, the cover, the bracket, and/or the housing. The seal(s) may be configured for radial compression and/or being radial compressed during mounting. For example, the seal(s) may comprise an annular and/or ring-shaped form. A (first) seal may be configured for sealing the lamp and (with respect to) the cover. It is also possible that a (first) seal is configured for sealing the lamp or the cover with respect to the bracket. A (second) seal may be configured for sealing the cover or the lamp with respect to the bracket. A (third) seal can be configured for sealing the housing with respect to the bracket.

In the context of the present invention, a system may be provided wherein (at least in parts and/or in a section) the lamp and/or the cover, are symmetrical with respect to the longitudinal direction, wherein in particular (at least in parts and/or in a section) the housing, the bracket, the seal and/or the sound generator are symmetrical with respect to the longitudinal direction.

In the context of the present invention, a system may be provided wherein an outer dimension of the system is identical both in the first configuration and second configuration.

Therefore, the system may be mounted in a defined space of a vehicle, e.g. for a front, side and/or rear lamp, independent of the first and/or second configuration.

Mounting can be performed by assembly of the parts (essentially) along (or opposite to) the longitudinal direction.

The housing may (in a first step) be provided and oriented along the longitudinal direction. Then the printed circuit board may be placed and/or attached inside the housing. Then the sound generator may be placed and/or attached inside the housing and/or on the printed circuit board. Then the bracket may be placed and/or attached inside and/or at the housing. The bracket may be placed at and/or (partly around) the sound generator, in particular such that the alerting signal is only propagated into and/or through the bracket. Then the cover and/or lamp may be inserted and/or attached to the bracket and/or housing. In a first configuration, the cover may (first) be mounted, in particular followed by the lamp, which may be inside of the cover with respect to the longitudinal direction. In a second configuration, the lamp may (first) be mounted, in particular followed by the cover, which may be inside of the lamp with respect to the longitudinal direction.

According to a second aspect of the invention, the above objective problem is solved by a vehicle, in particular electrical and/or hybrid vehicle, comprising at least one system according to the first aspect.

The (mounted and/or finished) system can therefore be arranged in front and/or side and/or back of the vehicle, in particular in a space designed for receiving a system and/or lightning device.

This means that the same technical advantages may be realized with respect to the vehicle according to the second aspect, which have already been described above for the system according to the first aspect of the invention.

Additional technical features, advantages and details of the invention are disclosed by the following description of the figures. The figures provide a detailed description of possible embodiments of the present invention. Therefore, the features described by the claims and the description can be realized alone or in (any) combination. The following exemplary description includes:
- Fig. 1: a system in a first configuration,
- Fig. 2: a system in a second configuration,
- Fig. 3: a system in a first configuration,
- Fig. 4: a system in a second configuration, and
- Fig. 5: a vehicle.

In the following figures identical reference signs are used for identical (or corresponding) features, in particular for different embodiments of the invention.

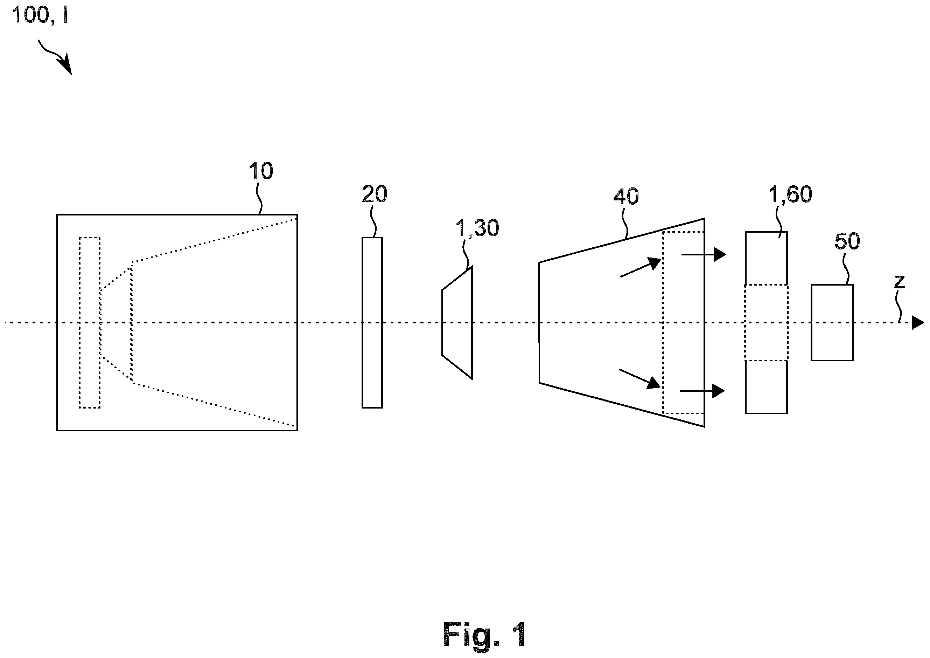

Fig. 1 shows an (exploded view of an) acoustic vehicle 200 alerting system 100 for a vehicle 200, in particular for an electric vehicle 200 and/or hybrid vehicle 200, comprising:
- a lamp 50 configured for providing an illumination along a longitudinal direction z,
- a speaker 1 configured for providing an alerting signal along the longitudinal direction z, wherein the speaker 1 comprises a cover 60,
   ∘ wherein the lamp 50 and the cover 60 are configured in the first configuration I, wherein the lamp 50 is arranged inside of the cover 60.

The housing 10 may comprise space (dashed lines) for a printed circuit board (20), a sound generator 30 of the speaker 1, and a bracket 40. The bracket 40 may receive the cover 60 and the lamp 50 (indicated by the dashed lines). The alerting signal generated by the sound generator 30 may be guided by the bracket 40, in particular around the lamp 50 (indicated by the arrows). The alerting signal may pass the cover 60 and be emitted to the surroundings and/or along the longitudinal direction z.

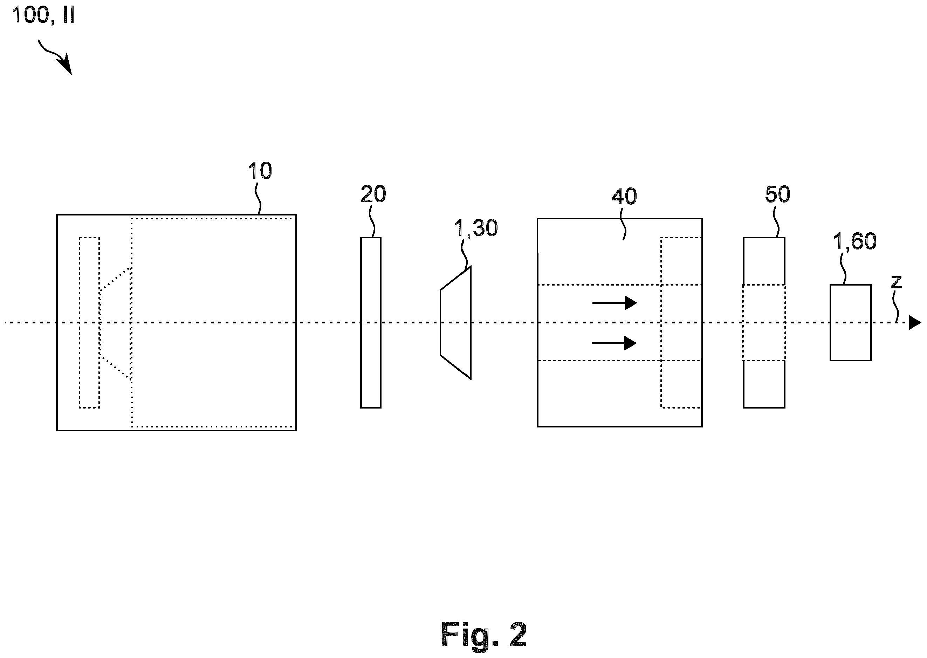

Fig. 2 shows an (exploded view of an) acoustic vehicle 200 alerting system 100 for a vehicle 200, in particular for an electric vehicle 200 and/or hybrid vehicle 200, comprising:
- a lamp 50 configured for providing an illumination along a longitudinal direction z,
- a speaker 1 configured for providing an alerting signal along the longitudinal direction z, wherein the speaker 1 comprises a cover 60,
   ∘ wherein the lamp 50 and the cover 60 are configured in the second configuration II, wherein the cover 60 is arranged inside of the lamp 50.

The housing 10 may comprise space (dashed lines) for a printed circuit board (20), a sound generator 30 of the speaker 1, and a bracket 40. The bracket 40 may receive the lamp 50 and the cover 60 (indicated by the dashed lines). The alerting signal generated by the sound generator 30 may be guided by the bracket 40, in particular (centrally) through the bracket and/or the lamp 50 (indicated by the arrows). The alerting signal may pass the cover 60 and be emitted to the surroundings and/or along the longitudinal direction z.

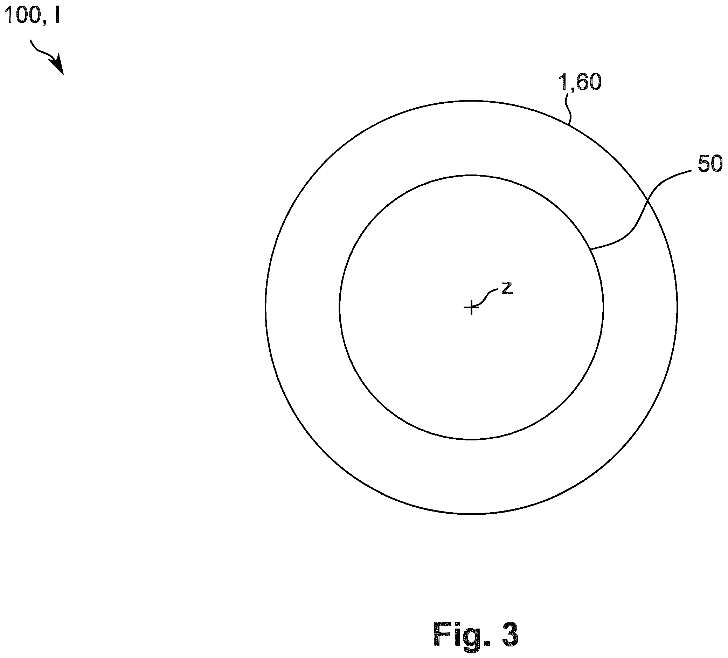

Fig. 3 shows a (front) view of the system 100 in the first configuration I. The view is oriented perpendicular to the longitudinal direction z. The lamp 50 has a circular cross-section and/or a smaller diameter than the cover 60. The speaker 1 and/or the cover 60 has a ring-shaped cross-section and/or a larger diameter than the lamp 50.

Therefore, the lamp 50 is arranged inside of the cover 60 with respect to and/or perpendicular to the longitudinal direction z.

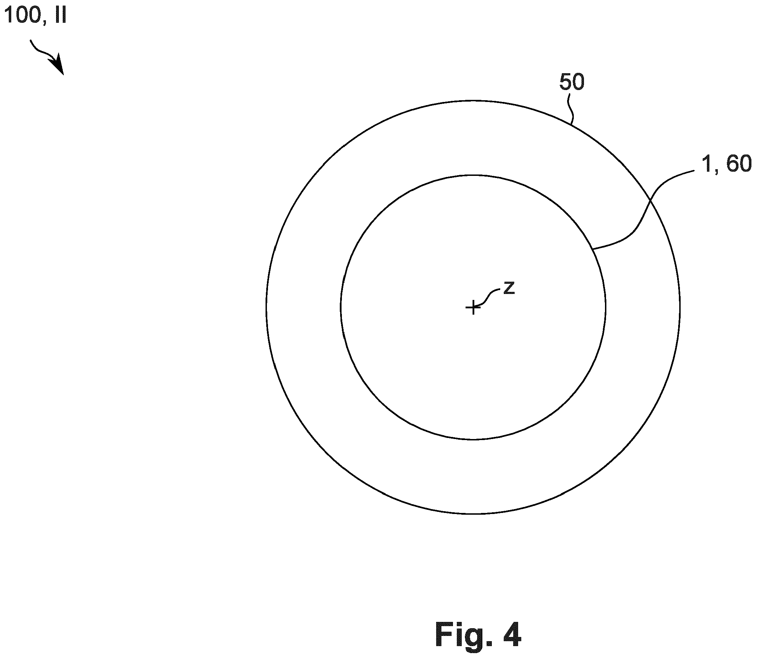

Fig. 4 shows a (front) view of the system 100 in the second configuration II. The view is oriented perpendicular to the longitudinal direction z. The lamp 50 has a ring-shaped cross-section and/or a larger diameter than the speaker 1 and/or the cover 60. The speaker 1 and/or the cover 60 has a circular cross-section and/or a smaller diameter than the lamp 50. Therefore, the cover 60 is arranged inside of the lamp 50 with respect to and/or perpendicular to the longitudinal direction z.

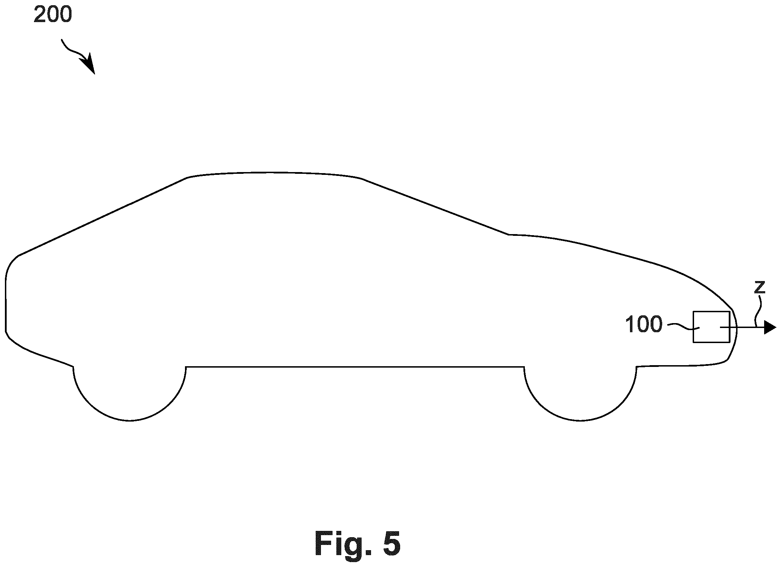

Fig. 5 shows a vehicle 200 with at least one acoustic vehicle 200 alerting system 100.

### List of reference signs

- 1: speaker
- 10: housing
- 20: printed circuit board
- 30: sound generator
- 40: bracket
- 50: lamp
- 60: cover
- 100: system
- 200: vehicle
- I: first configuration
- II: second configuration
- z: longitudinal direction

## Claims

1. Acoustic vehicle (200) alerting system (100) for a vehicle (200), in particular for an electric vehicle (200) and/or hybrid vehicle (200), comprising:
- a lamp (50) configured for providing an illumination along a longitudinal direction (z),
- a speaker (1) configured for providing an alerting signal along the longitudinal direction (z), wherein the speaker (1) comprises a cover (60),
- wherein the lamp (50) and the cover (60) are configured to be selectively arranged in a first configuration (I) or a second configuration (II), wherein
∘ in the first configuration (I) the lamp (50) is arranged inside of the cover (60), or
∘ in the second configuration (II) the cover (60) is arranged inside of the lamp (50).

2. System (100) according to claim 1,
wherein
- in the first configuration (I), an outer surface of the lamp (50) is oriented towards an inner surface of the cover (60),
- in the second configuration (II), an outer surface of the cover (60) is oriented towards an inner surface of the lamp (50).

3. System (100) according to claim 1 or 2,
wherein the speaker (1) comprises a sound generator (30) which is configured identical in the first configuration (I) and the second configuration (II), wherein the sound generator (30) is configured for generating the alerting signal.

4. System (100) according to any one of the preceding claims,
comprising a housing (10) configured to receive the lamp (50), the speaker (1) and the cover (60), wherein the outer circumference of either the lamp (50) or the cover (60) is in contact with an inner surface of the housing (10).

5. System (100) according to the preceding claim,
wherein the housing (10) is configured identical in the first configuration (I) and the second configuration (II).

6. System (100) according to any one of the preceding claims,
comprising a printed circuit board (20) on which the speaker (1) is mounted, wherein the printed circuit board (20) is configured identical in the first configuration (I) and the second configuration (II).

7. System (100) according to any one of the preceding claims,
wherein the lamp (50) and the cover (60) are coaxially aligned, in particular symmetric with respect to each other and/or the longitudinal direction (z).

8. System (100) according to any one of the preceding claims,
comprising a bracket (40) configured for holding the cover (60).

9. System (100) according to the preceding claim,
wherein, in particular in the first configuration (I), the bracket (40) is configured to propagate, in particular amplify, the alerting signal.

10. System (100) according to any one of the preceding claims 9 or 10,
wherein the bracket (40) comprises a first contact and a second contact, wherein the first contact and the second contact are electrically connected by a conductor, wherein the conductor is configured to provide power to the lamp (50).

11. System (100) according to any one of the preceding claims,
comprising a seal arranged between the lamp (50) and the cover (60).

12. System (100) according to any one of the preceding claims,
wherein the lamp (50) and/or the cover (60), are symmetrical with respect to the longitudinal direction (z), wherein in particular the housing (10), the bracket (40), the seal and/or the sound generator (30) are symmetrical with respect to the longitudinal direction (z).

13. System (100) according to any one of the preceding claims,
wherein an outer dimension of the system (100) is identical both in the first configuration (I) and second configuration (II).

14. Acoustic vehicle (200), in particular electrical and/or hybrid vehicle (200), comprising at least one system (100) according to any one of the preceding claims.
